Europäisches Patentamt

European Patent Office

Office européen des brevets

(19)

(11) Numéro de publication: **0 082 042**
**B1**

(12) # FASCICULE DE BREVET EUROPEEN

(45) Date de publication du fascicule du brevet:
06.11.85

(51) Int. Cl.⁴: **B 01 D 1/28, C 10 G 7/02**

(21) Numéro de dépôt: **82402177.8**

(22) Date de dépôt: **30.11.82**

(54) **Procédé de rebouillage par recompression de vapeurs.**

(30) Priorité: **04.12.81 FR 8122742**

(43) Date de publication de la demande:
**22.06.83 Bulletin 83/25**

(45) Mention de la délivrance du brevet:
**06.11.85 Bulletin 85/45**

(84) Etats contractants désignés:
**AT BE DE GB IT NL**

(56) Documents cités:
**GB - A - 2 074 035**
**US - A - 2 315 843**

**ELECTRICITE ET ECONOMIES D'ENERGIE, vol. 89, no. 3, mars 1980, pages 219-224, Paris (FR); L. MULLER: "7 - Distillation et recompression mécanique des vapeurs: optimisation technico-économique".**

(73) Titulaire: **ELF FRANCE Société Anonyme dite:, 137, Rue de l'Université, F-75340 Paris Cedex 07 (FR)**

(72) Inventeur: **Gourlia, Jean-Paul, 11 rue Dugesclin, F-69006 Lyon (FR)**
Inventeur: **Jacob, Philippe, 1 quai Gillet, F-69004 Lyon (FR)**
Inventeur: **Jamen, Robert, 19. av. Jean Gotail, F-69540 Irigny (FR)**

(74) Mandataire: **Epstein, Henri, 18 Residence La Gaillarderie, F-78590 Noisy-Le-Roi (FR)**

## Description

La présente invention se rapporte à un procédé de rebouillage dans une colonne de distillation opérant sous pression.

Selon les procédés de rebouillage connus, on soutire une partie du produit de fond de la colonne, on la rechauffe par l'échange indirect de chaleur avec un fluide de niveau thermique élevé, puis on sépare les phases vapeur et liquide et on réinjecte la phase vapeur dans la colonne. Le fluide de niveau thermique élevé utilisé est soit de la vapeur d'eau à pression élevée, soit un fluide chaud provenant d'une autre unité de raffinage. Dans les deux cas, il s'agit d'un fluide, dont l'utilisation pour le rebouillage signifie une dégradation importante du point de vue énergétique et pose le problème d'économie d'énergie.

L'invention a pour objet de remédier à cet inconvénient en faisant l'économie d'une source aussi précieuse qu'un fluide de haut niveau thermique.

Elle concerne plus particulièrement un procédé de rebouillage d'une colonne de distillation opérant sous pression selon lequel du produit de fond soutiré de la colonne est détendu puis comprimé à la pression régnant dans la colonne de distillation avant réinjection dans cette colonne et qui est caractérisé en ce que la totalité du produit de fond soutiré est détendue à une pression supérieure à la pression atmosphérique dans un ballon de détente, la fraction vapeur résultant de la détente est soumise à la compression, dont le travail est déterminé par le taux de détente appliqué à la fraction liquide soutirée et qui varie de 2 à 4 et par la quantité de vapeur à comprimer.

Il est déjà connu, pour assurer le rebouillage des colonnes de distillation, de comprimer les produits issus de la tête de la colonne de distillation à l'état de vapeur. Toutefois, l'application d'une telle technique se heurte à des contraintes dues aux niveaux termiques relatifs des produits de tête et de fond de colonne.

En effet, plus l'écart entre les niveaux thermiques de ces produits est important, plus il est nécessaire, lorsqu'on utilise les produits de tête pour le rebouillage de la colonne, de leur appliquer un taux de compression important. On se heurte alors très rapidement à un obstacle économique et même parfois à une impossibilité technique relative à la température critique du fluide. En fait, cette technique n'est utilisable que pour des écarts de température faibles de l'ordre de 30°C, ce qui en limite l'application à quelques séparations, telles que la séparation d'isomères.

Le procédé selon l'invention peut être assimilé à la technique de la pompe à chaleur.

La détente c... s la vanne étant isenthalpique, la quantité de ch... ur latente nécessaire à la vaporisation de la phase vapeur obtenue dans le ballon de flash est fournie par la phase liquide sous forme de chaleur sensible. De ce fait, la température de la phase liquide est beaucoup plus basse que la température du produit de fond de tour avant vanne de détente. Le résidu, c.à.d. le produit de fond, est donc une source de chaleur à bas niveau thermique, que l'on peut appeler la source froide.

D'autre part, la phase vapeur issue du ballon de détente et recomprimée échange de la chaleur et de la matière avec le fond de tour. Elle fournit l'energie nécessaire à la séparation des produits légers et lourds dans la colonne. On peut appeler le fond de tour la source chaude, car il reçoit de la chaleur.

Dans le procédé selon l'invention, la chaleur a été prélevée à une source froide, qui est le résidu, dont le niveau thermique a été élevé grâce à un compresseur, tandis qu'une quantité de chaleur à haut niveau thermique a été fournie à une source chaude qui est le fond de tour.

Le rebouilleur classique apportant une quantité de chaleur Q a été remplacé par l'ensemble de vanne de détente et de ballon de détente et par le compresseur, fournissant le travail W. La quantité de chaleur fournie par le résidu, donc la source froide, est Q - W. Le coefficient de performance est défini par la relation

$$COP = \frac{Q}{W} \, .$$

Le procédé de rebouillage selon l'invention, aisément applicable aux colonnes de distillation travaillants sous fortes pressions, peut également s'appliquer à toute tour de distillation par la mise en place éventuelle de systèmes adéquats abaissant la pression dans le ballon de détente. La pression régnant dans le ballon doit être telle, que la fraction vaporisée fournit le débit de vapeur nécessaire pour assurer le rebouillage et, par conséquent, un bon fonctionnement de la colonne. Le travail du compresseur est déterminé par le rapport de compression et par la quantité de vapeur à comprimer.

Au cours du fonctionnement réel de la colonne, les principaux paramètres, tels que le débit d'alimentation et le fractionnement, évoluent. Ces variations se traduisent par une demande plus ou moins élevée de chaleur de rebouillage, que l'on peut satisfaire de la manière suivante.

Si la demande s'accroit, il suffit de baisser la pression dans le ballon de détente en fermant un peu plus la vanne de détente. La vaporisation est alors plus importante, la température du ballon baisse et le compresseur fournit un travail plus important dû à l'augmentation du taux de compression et de la quantité de vapeur à recomprimer. La chaleur de rebouillage est augmentée de l'accroissement de travail du compresseur et de la quantité de chaleur sensible supplémentaire cédée par le résidu qui sort plus froid du ballon.

Dans le cas contraire, une augmentation de la pression dans le ballon de détente provoque une diminution de la fraction vaporisée et donc de la chaleur de rebouillage.

Un autre moyen de réglage du procédé consiste en un apport variable de chaleur dans le ballon de détente, qui garde alors une pression constante. Si, à pression constante, le ballon de détente est chauffé, la vaporisation s'accroit, le compresseur comprime une quantité de vapeur plus importante et fournit une quantité de chaleur de rebouillage plus importante.

Inversement, un refroidissement du ballon provoque une diminution de la quantité de vapeur, et par conséquent, de la chaleur de rebouillage.

En ce qui concerne l'intégration du cycle thermique selon l'invention dans le bilan énergétique de l'installation, il faut remarquer que, lorsque le rebouillage s'effectue selon le procédé classique d'échange de chaleur avec un fond à niveau thermique élevé, le résidu liquide résultant de l'échange se trouve à une température suffisamment élevée pour pouvoir servir p.ex. au préchauffage du fluide d'alimentation de la colonne.

En faisant l'économie d'un fluide à niveau thermique élevé pour le rebouillage, il est nécessaire d'opérer ledit préchauffage avec un fluide auxiliaire. L'intérêt de l'invention apparait aussi, si l'on compare les critères de choix du fluide servant au rebouillage selon le procédé classique et ceux du fluide assurant le préchauffage du fluide d'alimentation de la colonne. L'énergie du premier devant être utilisée sous forme de chaleur latente de rebouillage, elle doit nécessairement être de niveau plus élevé que celle du second qui assure uniquement l'échange de chaleur sensible pour le préchauffage.

D'autres particularités du procédé selon l'invention apparaitront à la lumière des exemples, qui suivent, du mode d'application à une colonne de stabilisation des essences.

Aux dessins annexes,

la fig. 1 représente un schéma général d'une installation mettant en œuvre le procédé selon l'invention, et

la fig. 2 une variante du schéma précédent.

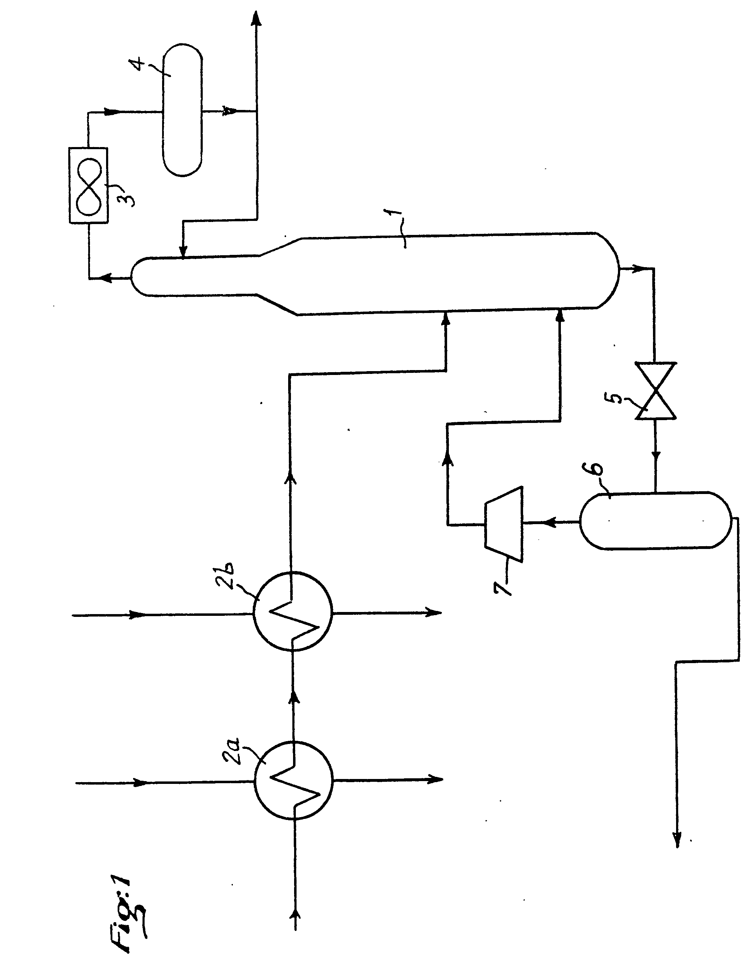

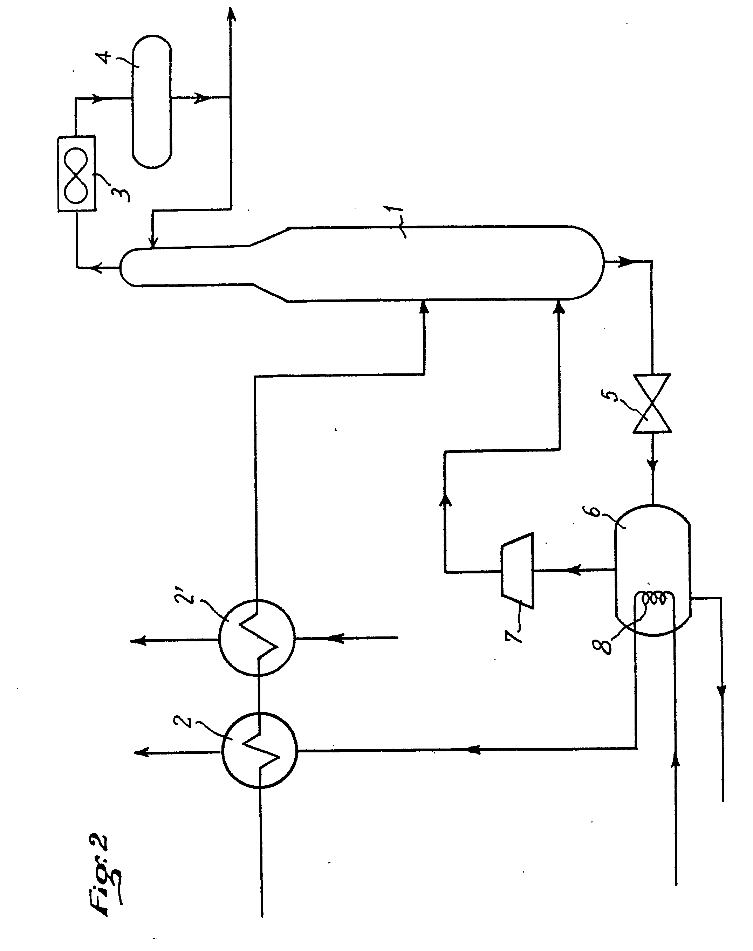

Les installations représentées aux figures 1 et 2 comprennent une colonne de distillation 1 pour la stabilisation des essences travaillant à une pression d'environ 11 bars et qui est alimentée en son milieu par un mélange d'hydrocarbures légers, préchauffé préalablement par échange indirect dans les échangeurs 2, 2', 2a et 2b à environ 130°C. Les vapeurs issues de la tête de colonne sont refroidies dans un réfrigérant 3, le condensat ayant la composition de gaz léger de pétrole est recueilli dans un ballon de tête 4, puis en partie réintroduit comme reflux dans la colonne et en partie évacué.

Une partie de fond de la colonne est soutirée du bas de la colonne et détendue au moyen d'une vanne de détente 5 dans un ballon de détente 6, où se séparent la phase vapeur et la phase liquide. Cette dernière est soutirée du bas du ballon, tandis que la phase vapeur est comprimée dans un compresseur 7 à la pression de la colonne et la phase comprimée est réinjectée au bas de la colonne 1. Grâce à la compression, la température de la phase réinjectée d'élève à environ 170°C.

Dans le cas du schéma selon la figure 1, le fond de la colonne prélevé a été détendu à 2,5 bars env. et la compression de la phase vapeur dans le compresseur 7 a nécessité un travail d'environ 1 200 kW. En abaissant la pression dans le ballon à 2,5 bars, l'apport de chaleur à la colonne a été suffisant sans qu'il ait eu besoin de procéder à un apport de chaleur à la phase détendue de vapeur avant sa compression. Toutefois, la phase liquide séparée dans le ballon était à la température d'env. 80°C, trop faible pour servir au préchauffage du produit d'alimentation.

Ce préchauffage a été réalisé dans les échangeurs 2a et 2b au moyen d'un fluide auxiliaire, tel qu'un gas oil léger d'un niveau thermique peu élevé, mais suffisant pour des raisons exposées ci-dessus.

Dans le cas du schéma selon la figure 2, le fond de la colonne a été détendu à 4 bars environ avec pour conséquence la formation d'une phase liquide ayant une température d'environ 100°C.

Un échangeur de chaleur 8 est monté dans le ballon 6 et alimenté en gas oil léger d'environ 145°C pour réaliser un apport de chaleur dans le ballon de détente en vue d'élever sa température. La compression de la vapeur a nécessité un travail de l'ordre de 800 kW et la température après compression s'est élevée à environ 170°C. Le gas oil ayant servi à l'échange de chaleur dans l'échangeur 8 est envoyé dans l'échangeur 2, où il sert au préchauffage du produit d'alimentation de la colonne. Le préchauffage du produit d'alimentation a été complété par l'échange indirect avec un fluide auxiliaire à bas niveau thermique dans l'échangeur 2'.

Le procédé selon l'invention permet de réaliser des économies d'énergie importantes. Dans le cas du fonctionnement de la colonne de stabilisation des essences, on a pu remplacer un fluide à haut niveau thermique, tel que le reflux circulant inférieur de la tour de distillation atmosphérique (RCI) à 332°C, par un gas oil léger à environ 150°C.

Il présente également une grande souplesse et permet d'ajuster la quantité de chaleur fournie à la colonne en fonction de la demande par des moyens relativement simples, tel que l'ajustement de la pression de détente et/ou de la température de la vapeur produite lors de la détente.

**Revendications**

1. Procédé de rebouillage d'une colonne de distillation opérant sous pression selon lequel du produit de fond soutiré de la colonne est détendu puis comprimé à la pression régnant dans la colonne de distillation avant réinjection dans cette colonne, caractérisé en ce que la totalité du produit de fond soutiré est détendue à une pression supérieure à la pression atmosphérique dans un ballon de détente, la fraction vapeur résultant de la détente est soumise à la compression, dont le travail est déterminé par le taux de détente appliqué à la fraction liquide soutirée et qui varie de 2 à 4 et par la quantité de vapeur à comprimer.

2. Procédé selon la revendication 1, caractérisé en ce qu'on ajuste la quantité de chaleur de rebouillage en réglant la pression à laquelle on détend le produit de fond prélevé de la colonne.

3. Procédé selon la revendication 1, caractérisé en ce qu'on ajuste la quantité de chaleur de rebouillage en réglant au moyen d'un échange indirect de chaleur la température dans le ballon de détente.

4. Procédé de rebouillage selon les revendications 1 à 3, caractérisé en ce qu'il est appliqué à une colonne de stabilisation des essences contenant à une pression d'environ 11 bars et en ce que l'on détend le produit de fond soutiré à la pression d'environ 4 bars, on rechauffe les vapeurs ainsi produites à environ 102°C au moyen d'échange indirect de chaleur avec un fluide auxiliaire à niveau thermique peu élevé et on les comprime à environ 11 bars, le fluide auxiliaire servant, après échange, au préchauffage du produit d'alimentation de la colonne.

**Patentansprüche**

1. Verfahren für die Wiedererhitzung einer unter Druck arbeitenden Destillationskolonne, bei dem das aus der Kolonne abgezogene Bodenprodukt entspannt und dann auf den Druck komprimiert wird, der in der Destillationskolonne vor Wiedereinspritzung in diese Kolonne herrscht, dadurch gekennzeichnet, dass der gesamte Umfang des abgezogenen Bodenproduktes in einem Entspannungskolben auf einen Druck entspannt wird, der über dem atmosphärischen Druck liegt, dass die sich aus der Entspannung ergebende Dampffraktion einer Komprimierung unterzogen wird, deren Arbeit durch das Entspannungsniveau bestimmt wird, das auf die abgezogene Flüssigkeitsfraktion beaufschlagt wird und die von 2 - 4 und durch die Menge des zu komprimierenden Dampfes variiert.

2. Verfahren nach Anspruch 1, dadurch gekennzeichnet, dass die Wärmemenge der Wiedererhitzung dadurch eingestellt wird, indem man den Druck steuert, bei dem das aus der Kolonne abgezogene Bodenprodukt entspannt wird.

3. Verfahren nach Anspruch 1, dadurch gekennzeichnet, dass die Wärmemenge der Wiedererhitzung dadurch eingestellt wird, dass man durch einen indirekten Wärmetausch die Temperatur im Entspannungskolben steuert.

4. Wiedererhitzungsverfahren nach einem der Ansprüche 1 bis 3, dadurch gekennzeichnet, dass auf eine Stabilisierungskolonne Essenzen beaufschlagt werden, die mit einem Druck von etwa 11 bar arbeiten und dadurch, dass das abgezogene Bodenprodukt auf einen Druck von etwa 4 bar entspannt wird und die so produzierten Dämpfe auf etwa 102°C mittels indirektem Wärmeaustausch mit einem Hilfsfluid auf ein geringes thermisches Niveau aufgeheizt werden, wonach sie auf etwa 11 bar komprimiert werden, wobei das Hilfsfluid nach dem Wärmetausch für die Aufwärmung des Zufuhrproduktes der Kolonne dient.

**Claims**

1. Method of reboiling a distillation column operating under pressure in which a part of the bottom product is withdrawn from the column and expanded, then compressed to the pressure reigning in the distillation column and reinjected into this column, characterized in that the withdrawn bottom product as a whole is expanded at a pressure above the atmospheric in an expansion balloon flask, whereas the vapour fraction from the expansion is subject to compression, the work of which is determined by the expansion ratio applied to the withdrawn bottom product and varying between 2 and 4 and by the amount of the vapour to be compressed.

2. Method according to claim 1, characterized in that the amount of reboiling heat is adjusted by regulating the pressure to which the bottom product taken from the column is expanded.

3. Method according to claim 1, characterized in that the amount of boiling heat is adjusted by regulating the temperature in the expansion balloon flask by means of an indirect heat exchange.

4. Method for reboiling a petrol stabilization column operating at a pressure of about 11 bar according to one of claims 1 to 3, characterized in that the bottom product withdrawn is expanded to the pressure of about 4 bar, the vapours thus produced are heated to about 102°C by means of indirect heat exchange with an auxiliary fluid at a thermal level which is not very high and they are compressed to about 11 bar, the auxiliary fluid serving, after exchange, for preheating the product supplying the column.

Fig:1

0 082 042

Fig. 2